# EUROPEAN PATENT APPLICATION

(11) **EP 3 354 554 A1**
(43) Date of publication of application: **01.08.2018**
(21) Application number: 18152768.0
(22) Date of filing: 22.01.2018
(51) Int. Cl.: B62M 9/135

(54) **FASTENING DEVICE FOR BICYCLE FRONT DERAILLEUR AND BICYCLE FRONT DERAILLEUR AND BICYCLE USING THE FASTENING DEVICE**

(30) Priority: 26.01.2017 TW 106201623 U
(71) Applicant: J.D Components Co., Ltd., Shou Shui Hsiang, Chang Hua Hsien (TW)
(72) Inventor: PAI, Min-Lang, CHANG HUA HSIEN (TW)
(74) Representative: Becker Kurig Straus

(57) **Abstract**

A fastening device (15) for a bicycle front derailleur (10) includes a supporting unit (20) disposed between a mounting bracket (5) and a main body (11), a spacer (40) disposed on the mounting bracket (5) and having an adjusting portion (42), a threaded fastener (50), and an adjuster (60) disposed on the adjusting portion (42) of the spacer (40). The supporting unit (20) has one end thereof being abutted against a seat tube (3), and another end thereof having a supporting portion (20) for abutting the adjuster (60). The mounting bracket (5) is located between the supporting unit (20) and the spacer (40). The threaded fastener (50) is inserted through the spacer (40), the mounting bracket (5), the supporting unit (20) and the main body (11) in order, thereby fastening the spacer (40), the supporting unit (20) and the main body (11) to the mounting bracket (5). When moving axially, the adjuster (60) is able to drive the spacer (40), the threaded fastener (50) and the main body (11) to rotate about a derailleur adjustment axis (Al).

## Description

### BACKGROUND OF THE INVENTION

### 1. Field of the Invention

The present invention relates to bicycle front derailleurs and more particularly, to a fastening device for a bicycle front derailleur, and a bicycle front derailleur and a bicycle using the fastening device.

### 2. Description of the Related Art

For adapting the various road conditions or the vigor allotment of the rider, the bicycle is generally equipped with a front derailleur and a rear derailleur. The front derailleur is primarily collocated with a sprocket, and the rear derailleur is installed with a chainwheel, so that the speed can be changed by the change of the gear ratio between the sprocket and the chainwheel.

The traditional front derailleur primarily includes a chain guide, a transmission unit, and a main body. The front derailleur is installed on a seat tube of the bicycle in a way that the main body is fastened to a mounting bracket by a screw. Because the position and precision of the mounting bracket differs according to the bicycle, when the front derailleur is installed on the bicycle frame for the first time, the user has to adjust the relative position and angle between the front derailleur and the bicycle frame or the mounting bracket, for ensuring the speed change can be performed successfully. Besides, after the bicycle is ridded for a period of time, the front derailleur may be displaced relative to the seat tube of the bicycle, thereby disabling the chain guide to successfully drive a chain to switch between the various tooth positions on the sprocket.

To solve the aforesaid problem, European Patent No. 2520480 (EP 2520480 B1) disclosed a bicycle front derailleur body and an apparatus for adjustable rest for such body. The apparatus includes a fixed part, a mobile part, and a device. The fixed part is mounted to a lateral surface of the derailleur body. The mobile part is angularly movably mounted on the fixed part and has a rest portion abutted against the seat tube. The device is adapted for adjusting the mobile part to rotate relative to the fixed part to a desired operative angular position, thereby adjusting the angle of the front derailleur body relative to the mounting bracket.

Because the aforesaid apparatus has to be accommodated in the space between the lateral surface of the bicycle front derailleur body and the seat tube, and the fixed part of the apparatus has to be fastened to the body by the screw beforehand, the bicycle front derailleur and the seat tube has to be correspondingly modified in structure and size. It is obvious that the apparatus is not universally adaptable, thereby needing improvement.

### SUMMARY OF THE INVENTION

Therefore, it is an objective of the present invention to provide a fastening device for a bicycle front derailleur, and a bicycle front derailleur and a bicycle using the fastening device, which is novel in structure, universally adaptable, and has high strength for installation.

To attain the above objective, the present invention provides a fastening device for a bicycle front derailleur. The bicycle front derailleur is installed on a seat tube of a bicycle and the seat tube is equipped with a mounting bracket. The bicycle front derailleur includes a main body rotatable relative to the mounting bracket about a derailleur adjustment axis. The fastening device is characterized in including a supporting unit, a spacer, a threaded fastener and an adjuster.

The supporting unit is disposed between the mounting bracket and the main body. An end of the supporting unit is abutted against the seat tube. Another end of the supporting unit has a supporting portion. The spacer is movably disposed on the mounting bracket. The mounting bracket is located between the supporting unit and the spacer. The spacer has an adjusting portion. The threaded fastener is inserted through the spacer, the mounting bracket, the supporting unit and the main body in order along an installation axis so as to fasten the spacer, the supporting unit and the main body to the mounting bracket. The adjuster is disposed on the adjusting portion of the spacer movably along an axis of the adjuster, and an end of the adjuster is abutted against the supporting portion of the supporting unit. When the adjuster moves along the axis thereof, the adjuster is able to drive the spacer to rotate about the derailleur adjustment axis so as to drive the threaded fastener and the main body to rotate about the derailleur adjustment axis.

In other words, because of the aforesaid structural features of the invention, when the bicycle front derailleur is installed for the first time or has been used for a period of time, thereby having to be adjusted in relative position, the user only has to adjust the threaded fastener to a slightly fastening condition, i.e. false fixation, and then adjust the adjuster by moving it along its axis to drive the spacer, the threaded fastener and the main body to rotate about the derailleur adjustment axis. After the adjuster is adjusted to an appropriate position, the user screws on the threaded fastener, and the adjustment of the bicycle front derailleur is accomplished.

Preferably, the supporting unit has an arc receiving portion; an exterior surface and an interior surface of the arc receiving portion are shaped to match with the mounting bracket and the main body respectively.

Preferably, the supporting portion of the supporting unit is extended from the arc receiving portion and extended away from the installation axis; the spacer has a base; the adjusting portion of the spacer is extended from the base and extended away from the installation axis.

Besides, the present invention further provides a bicycle front derailleur including the aforesaid fastening device. The present invention also provides a bicycle including the aforesaid fastening device.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

FIG. 1 is a perspective view showing a bicycle front derailleur according to an embodiment of the present invention, which is installed on a seat tube of a bicycle equipped with a mounting bracket.
FIG. 2 is an exploded perspective view of the bicycle front derailleur according to the embodiment of the present invention.
FIG. 3 is another exploded perspective view of the bicycle front derailleur according to the embodiment of the present invention, the visual angle of which is different from FIG. 2.
FIG. 4 is a top sectional view of the bicycle front derailleur according to the embodiment of the present invention, which is viewed in a direction perpendicular to a derailleur adjustment axis, primarily showing an adjuster in the condition before the adjustment.
FIG. 5 is a top sectional view of the bicycle front derailleur according to the embodiment of the present invention, which is viewed in the direction perpendicular to the derailleur adjustment axis, primarily showing the adjuster in the condition after the adjustment.
FIG. 6 is a schematic view showing the top sectional view before the adjustment (FIG. 4, drawn in solid lines) superimposed on the top sectional view after the adjustment (FIG. 5, drawn in dotted lines).

### DETAILED DESCRIPTION OF THE INVENTION

The present invention will become more fully understood from the detailed description given herein below and the accompanying drawings.

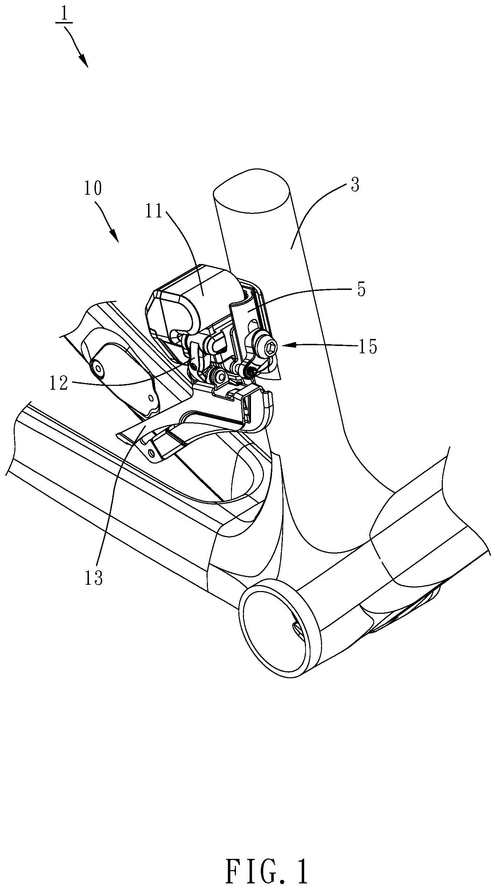

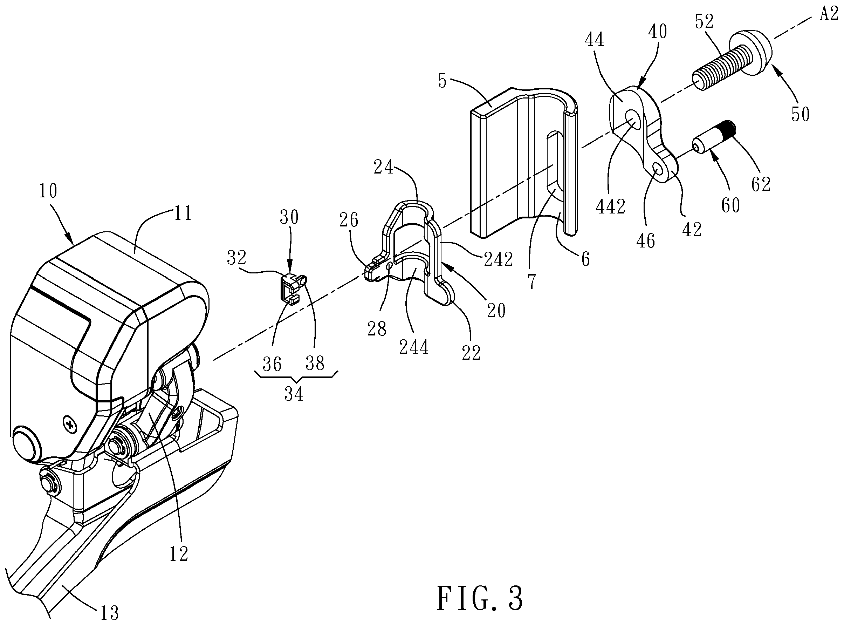

Refer to FIGS. 1-3, which show a fastening device 15 of a bicycle front derailleur 10 according to an embodiment of the present invention. The bicycle front derailleur 10 is installed on a seat tube 3 of a bicycle 1 and the seat tube 3 is equipped with a mounting bracket 5. The bicycle front derailleur 10 includes a main body 11, a transmission unit 12, and a chain guide 13. The main body 11 is rotatable relative to the mounting bracket 5 about a derailleur adjustment axis A1. In this embodiment, the bicycle front derailleur 10 is installed on the seat tube 3 which is inclined from the top end to the bottom end thereof toward the front wheel (the inclined front direction). The mounting bracket 5 is a thin and long sheet 6 extended along the seat tube 3, and has a through hole 7. The mounting bracket 5 is arc-shaped on the cross-sections perpendicular to the seat tube 3.

The following description regards the structure of the fastening device 15 of the bicycle front derailleur 10 according to the embodiment of the present invention.

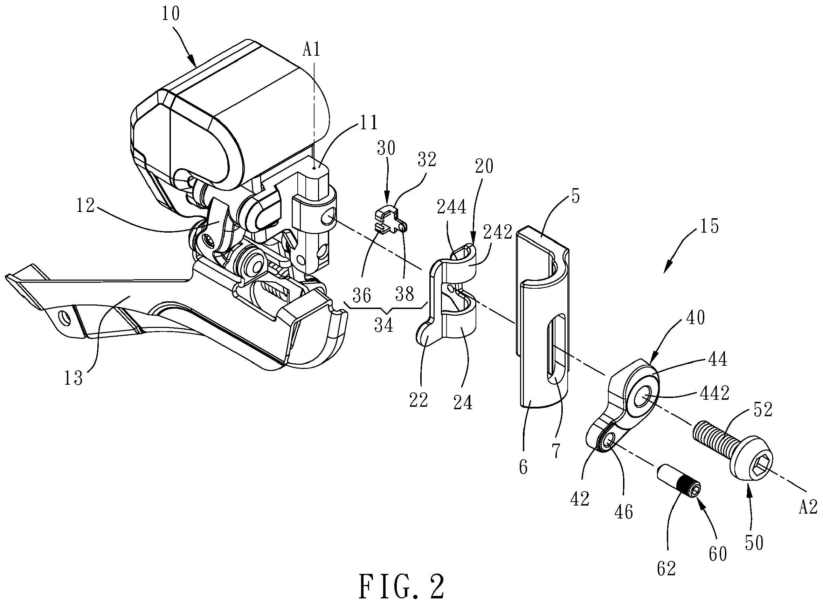

Referring to FIGS. 2-3, the fastening device 15 of the bicycle front derailleur 10 includes a supporting unit 20, a spacer 40, a threaded fastener 50, and an adjuster 60.

The supporting unit 20 is disposed between the mounting bracket 5 and the main body 11. An end of the supporting unit 20 is abutted against the mounting bracket 5 of the seat tube 3. Another end of the supporting unit 20 has a supporting portion 22. In this embodiment, the supporting unit 20 has an arc receiving portion 24. The exterior surface 242 and interior surface 244 of the arc receiving portion 24 are shaped to match with the mounting bracket 5 and the main body 11 respectively. Besides, the supporting portion 22 of the supporting unit 20 is extended from the arc receiving portion 24 and extended away from an installation axis A2.

The spacer 40 is movably disposed on the mounting bracket 5. The mounting bracket 5 is located between the supporting unit 20 and the spacer 40. The spacer 40 has an adjusting portion 42. Besides, the spacer 40 has a base 44. The adjusting portion 42 of the spacer 40 is extended from the base 44 and extended away from the installation axis A2. The adjusting portion 42 of the spacer 40 corresponds in position to the supporting portion 22 of the supporting unit 20. The adjusting portion 42 of the spacer 40 has a threaded hole 46.

The threaded fastener 50 is inserted through the spacer 40, the through hole 7 of the mounting bracket 5, the supporting unit 20 and the main body 11 in order along the installation axis A2, so as to fasten the spacer 40, the supporting unit 20 and the main body 11 to the mounting bracket 5.

The adjuster 60 is disposed on the adjusting portion 42 of the spacer 40 movably along the axis of the adjuster 60. An end of the adjuster 60 is abutted against the supporting portion 22 of the supporting unit 20. In this embodiment, the adjuster 60 has a threaded section 62. The threaded section 62 of the adjuster 60 is screwed in the threaded hole 46 of the adjusting portion 42 of the spacer 40. That means, when the adjuster 60 is rotated, the collocation of the threaded section 62 and the threaded hole 46 makes the adjuster 60 move frontward and backward along the axis thereof relative to the spacer 40.

It deserves to be specified that in this embodiment, the derailleur adjustment axis A1 is perpendicular to the installation axis A2, and the axis of the adjuster 60 is parallel to the installation axis A2. Besides, the base 44 of the spacer 40 has a through hole 442. The threaded fastener 50 has a rod portion 52 inserted in the through hole 442. The inner radius of the through hole 442 of the spacer 40 is substantially equal to the outer radius of the rod portion 52 of the threaded fastener 50.

In addition, the supporting unit 20 has an abutting member 30 disposed on a side of the arc receiving portion 24 and abutted against the mounting bracket 5 of the seat tube 3. In other words, the abutting member 30 is disposed on the arc receiving portion 24 and located on the side away from the supporting portion 22. The abutting member has an abutting portion 32 and an embedding portion 34 opposite to the abutting portion 32. The abutting portion 32 is abutted against the mounting bracket 5 of the seat tube 3. The embedding portion 34 has two encircling arms 36 and a protrusion 38. The arc receiving portion 24 has an engaging section 26 extended toward the rear of the bicycle, and a limiting trough 28. The two encircling arms 36 of the embedding portion 34 of the abutting member 30 encircle the engaging section 26 of the arc receiving portion 24, and the protrusion 38 of the abutting member 30 is embedded in the limiting trough 28 of the arc receiving portion 24.

The above illustration is related to the structure of the embodiment of the invention. The following illustration regards the operation and effect of the embodiment.

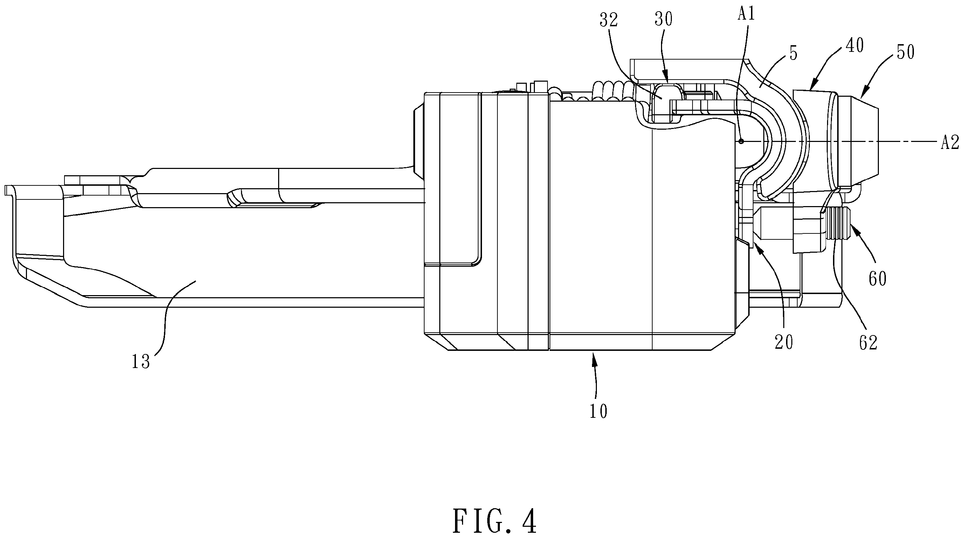

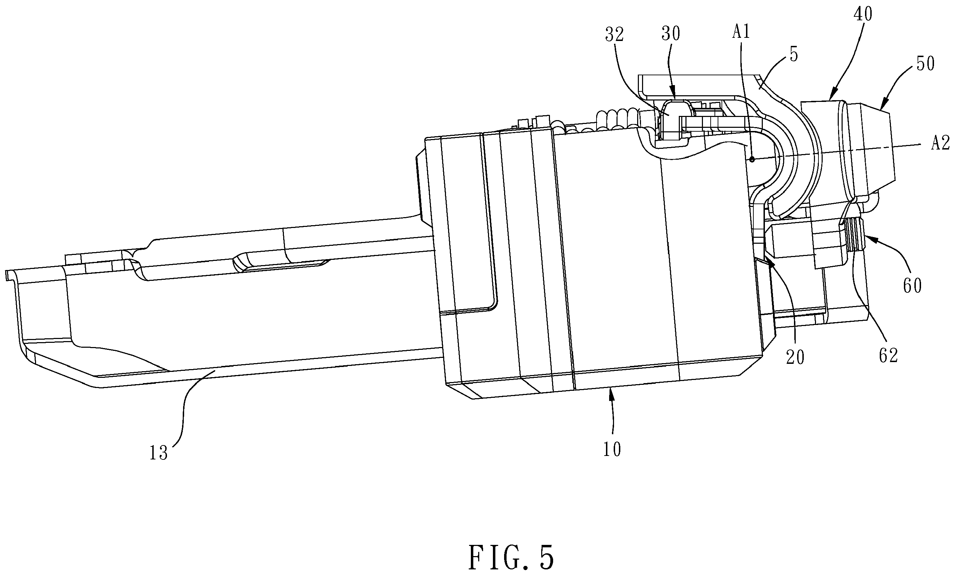

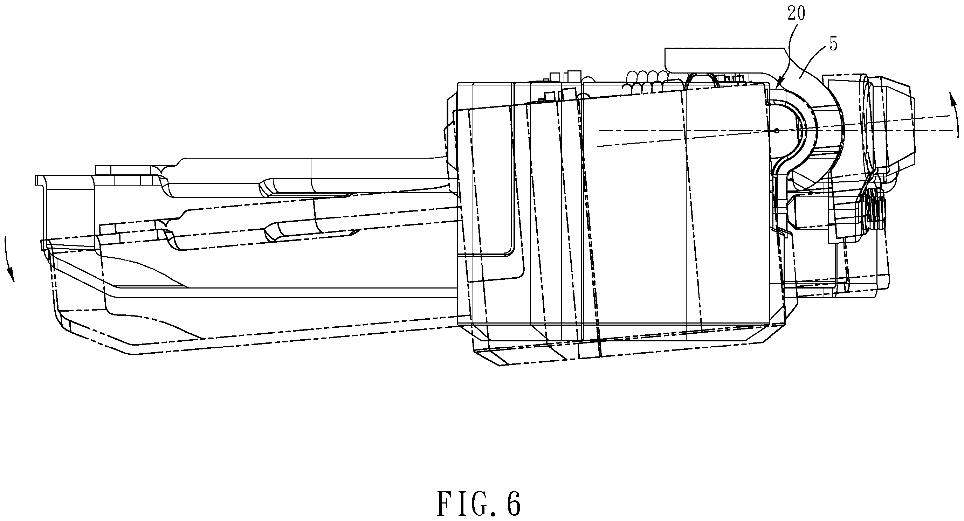

Referring to FIGS. 2-6, because the position and precision of the mounting bracket differs according to the bicycle, when the bicycle front derailleur 10 is installed on the seat tube 3 for the first time, the user has to adjust the relative position and angle between the bicycle front derailleur 10 and the seat tube 3 (or the mounting bracket 5), for ensuring the speed change can be performed successfully. Besides, after the bicycle is ridded for a period of time, the front derailleur thereof may be displaced because of vibration, collision or other reasons, thereby disabling the user to perform the operation of speed change successfully. In the aforesaid condition, the user needs to solve the unsuccess of speed change by adjusting the bicycle front derailleur 10. FIG. 4 is a schematic view showing the condition before the angular adjustment (the condition before the adjuster 60 is moved toward the main body 11). FIG. 5 is a schematic view showing the condition after the angular adjustment (the condition after the adjuster 60 is moved toward the main body 11). FIG. 6 is a schematic view showing FIG. 4 (solid lines) superimposed on FIG. 5 (dotted lines).

During the angular adjustment, the user firstly has to adjust the threaded fastener 50 to a slightly fastening condition, i.e. false fixation, and then applies a force to rotate the adjuster 60 to drive the adjuster 60 to move frontward and backward along its axis relative to the spacer 40. The condition that the adjuster 60 is moved toward the main body 11 is taken as an example here for illustration. Because the terminal end of the adjuster 60 is abutted against the supporting portion 22 of the supporting unit 20, and the supporting unit 20 is limited by that the abutting member 30 is abutted against the mounting bracket 5 of the seat tube 3 and thereby disabled from being rotated by the pushing of the adjuster 60, the supporting unit 20 and the mounting bracket 5 are not rotated by the frontward moving adjuster 60. On the contrary, the adjuster 60 drives the spacer 40 to rotate about the derailleur adjustment axis A1, so as to drive the threaded fastener 50 and the main body 11 to rotate about the derailleur adjustment axis A1. After the main body 11 and the chain guide 13 are adjusted to an appropriate position, the user screws on the threaded fastener 50, and the adjustment of the bicycle front derailleur 10 is accomplished. Besides, the present invention has a fine-tuning function. When the bicycle front derailleur 10 only needs to be fine-tuned, the user can slightly rotate the adjuster 60 to achieve the fine-tuning function of the bicycle front derailleur 10. Therefore, the present invention can avoid the condition of the traditional structure that the user applies too large force to cause excessive adjustment.

Although the aforesaid operation is illustrated in the condition that the adjuster 60 is moved toward the main body 11, however, the operative theorem thereof is identical with that of the condition that the adjuster 60 is moved away from the main body 11. Therefore, the latter condition is understandable to one skilled in the art according to the above illustration, thereby will not repeatedly mentioned hereunder.

In addition, for adapting different types of seat tubes 3 and front derailleurs 10, the abutting member 30 of the fastening device 15 of the invention is replaceable by another abutting member different from the former one in size and shape, so that the fastening device 15 of the invention is widely adapted for the various kinds of bicycles and front derailleurs. Compared with the structure of the traditional front derailleur, the invention is novel in structure, convenient in operation and universally adaptable.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A fastening device (15) for a bicycle front derailleur, the bicycle front derailleur (10) being installed on a seat tube (3) of a bicycle (1) and the seat tube (3) being equipped with a mounting bracket (5), the bicycle front derailleur (10) comprising a main body (11) rotatable relative to the mounting bracket (5) about a derailleur adjustment axis (A1), the fastening device (15) comprising:
a supporting unit (20) disposed between the mounting bracket (5) and the main body (11), an end of the supporting unit (20) being abutted against the seat tube (3), another end of the supporting unit (20) having a supporting portion (22);
a spacer (40) movably disposed on the mounting bracket (5), the mounting bracket (5) being located between the supporting unit (20) and the spacer (40), the spacer (40) having an adjusting portion (42);
a threaded fastener (50) inserted through the spacer (40), the mounting bracket (5), the supporting unit (20) and the main body (11) in order along an installation axis (A2) so as to fasten the spacer (40), the supporting unit (20) and the main body (11) to the mounting bracket (5); and
an adjuster (60) disposed on the adjusting portion (42) of the spacer (40) movably along an axis of the adjuster (60), an end of the adjuster (60) being abutted against the supporting portion (22) of the supporting unit (20), when the adjuster (60) moves along the axis thereof, the adjuster (60) being able to drive the spacer (40) to rotate about the derailleur adjustment axis (A1) so as to drive the threaded fastener (50) and the main body (11) to rotate about the derailleur adjustment axis (A1).

2. The fastening device (15) as claimed in claim 1, which is **characterized in that** the supporting unit (20) has an arc receiving portion (24); an exterior surface (242) and an interior surface (244) of the arc receiving portion (24) are shaped to match with the mounting bracket (5) and the main body (11) respectively.

3. The fastening device (15) as claimed in claim 2, which is **characterized in that** the supporting portion (22) of the supporting unit (20) is extended from the arc receiving portion (24) and extended away from the installation axis (A2); the spacer (40) has a base (44); the adjusting portion (42) of the spacer (40) is extended from the base (44) and extended away from the installation axis (A2).

4. The fastening device (15) as claimed in claim 3, which is **characterized in that** the adjusting portion (42) of the spacer (40) has a threaded hole (46); the adjuster (60) has a threaded section (62) screwed in the threaded hole (46).

5. The fastening device (15) as claimed in claim 3, which is **characterized in that** the derailleur adjustment axis (A1) is perpendicular to the installation axis (A2).

6. The fastening device (15) as claimed in claim 3, which is **characterized in that** the axis of the adjuster (60) is parallel to the installation axis (A2).

7. The fastening device (15) as claimed in claim 3, which is **characterized in that** the supporting unit (20) has an abutting member (30) disposed on a side of the arc receiving portion (24) and abutted against the seat tube (3).

8. The fastening device (15) as claimed in claim 7, which is **characterized in that** the abutting member (30) has an abutting portion (32) and an embedding portion (34) opposite to the abutting portion (32); the embedding portion (34) has two encircling arms (36) and a protrusion (38); the arc receiving portion (24) has an engaging section (26) and a limiting trough (28); the two encircling arms (36) encircle the engaging section (26), and the protrusion (38) is embedded in the limiting trough (28).

9. The fastening device (15) as claimed in claim 3, which is **characterized in that** the spacer (40) has a through hole (442); the threaded fastener (50) has a rod portion (52) inserted in the through hole (442); an inner radius of the through hole (442) is substantially equal to an outer radius of the rod portion (52).

10. A bicycle front derailleur (10) comprising the fastening device (15) as claimed in anyone of the aforesaid claims 1-9.

11. A bicycle (1) comprising the fastening device (15) as claimed in anyone of the aforesaid claims 1-9.
